# EUROPEAN PATENT APPLICATION

(11) **EP 4 585 401 A1**
(43) Date of publication of application: **16.07.2025**
(21) Application number: 25151043.4
(22) Date of filing: 09.01.2025
(51) Int. Cl.: B29C 65/08, B29C 65/64, B29C 65/48, B29C 65/50, B32B 37/14, B32B 37/00, B32B 37/06, B32B 27/00, B29L 31/30, B32B 37/12

(54) **WELDING THERMOPLASTIC COMPOSITE AND HONEYCOMB CORE**

(30) Priority: 10.01.2024 US 202418409053
(71) Applicant: Rohr, Inc., Chula Vista, CA 91910-2098 (US)
(72) Inventor: SHEN, Shyan Bob, San Diego (US); VAN TOOREN, Michael, San Diego (US); URSENBACH, Daniel O., El Cajon (US); WOODS, Jeffrey D., Beaumont (US)
(74) Representative: Dehns

(57) **Abstract**

A welded thermoplastic composite and honeycomb core structure (200) is manufactured by positioning a first thermoplastic composite skin (202) on a support structure, positioning a first thermoplastic film (204) over the first thermoplastic composite skin, positioning a honeycomb core (206) over the first thermoplastic film, positioning a second thermoplastic film (208) over the honeycomb core, and positioning a second thermoplastic composite skin (210) over the second thermoplastic film.

The second thermoplastic composite skin (210) is ultrasonically welded to the honeycomb core (206), after which the structure is flipped over and the first thermoplastic composite skin (202) then ultrasonically welded to the honeycomb core (206).

## Description

### TECHNICAL FIELD

The present disclosure generally relates to the field of aerostructures and, more particularly, to welding a thermoplastic composite to a honeycomb core for an aerostructure.

### BACKGROUND

An aircraft may include several aerostructures including a fuselage, interior parts, wings, a tail assembly, and nacelles, among others. Flight control surfaces, such as the wings and the tail, are configured to affect the yaw, roll and pitch of the aircraft during flight. Such flight control surfaces may include, for example, ailerons to affect the roll about a longitudinal axis, a rudder to affect the yaw about a vertical axis and an elevator to affect the pitch about a lateral axis, each axis being with respect to a coordinate system associated with the aircraft. Additional flight control surfaces include trailing edge flaps configured to affect the lift of a wing, leading edge slats configured to affect the stall speed of a wing and spoilers, generally located adjacent to and forward of the trailing edge flaps and configured to disrupt the airflow over a wing surface to reduce lift or to increase drag. Flight control surfaces are typically airfoil-like components configured to alter the flow of air about the wings or tail structure of the aircraft. Aerostructures, such as the fuselage and nacelles are configured to protect other structures, such as internal portions of the aircraft and the engines, respectively. Notwithstanding the simple shapes, aerostructures should possess sufficient structural integrity to withstand the forces applied during use over the operational life of the aircraft. Aerostructure exhibiting low weight and high strength may be fabricated thermoplastic materials. Thermoplastic materials are increasingly being used in various aerospace applications for the combination of benefits as light weight, high toughness, no storage time limit at room temperature, fast fabrication, fast assembly and suitable for automated manufacturing.

### SUMMARY

According to various embodiments of the present disclosure, a manufacturing method for manufacturing a welded thermoplastic composite and honeycomb core structure is provided. The method includes generating a thermoplastic composite and honeycomb structure by positioning a first thermoplastic composite skin on a support structure, positioning a first thermoplastic film over the first thermoplastic composite skin, positioning a honeycomb core over the first thermoplastic film, positioning a second thermoplastic film over the honeycomb core, and positioning a second thermoplastic composite skin over the second thermoplastic film. The method includes ultrasonic welding the second thermoplastic composite skin to the honeycomb core.

In various embodiments, the ultrasonic welding of the second thermoplastic composite skin to the honeycomb core melts the second thermoplastic film to bond the second thermoplastic composite skin to the honeycomb core. In various embodiments, the method further includes flipping over the thermoplastic composite and honeycomb structure, and ultrasonic welding the first thermoplastic composite skin to the honeycomb core. In various embodiments, the ultrasonic welding of the first thermoplastic composite skin to the honeycomb core melts the first thermoplastic film to bond the first thermoplastic composite skin to the honeycomb core. In various embodiments, the ultrasonic welding is at least one of ultrasonic spot welding or continuous ultrasonic welding.

In various embodiments, the first thermoplastic composite skin and the second thermoplastic composite skin include a thermoplastic matrix and a fiber-reinforcement embedded within the thermoplastic matrix. In various embodiments, the thermoplastic matrix includes at least one of a semi-crystalline thermoplastic resin or an amorphous thermoplastic resin. In various embodiments, the fiber-reinforcement includes a plurality of fiber-reinforcement fibers. In various embodiments, the plurality of fiber-reinforcement fibers is at least one of metal fibers, carbon fibers, insulating fibers, organic fibers, or inorganic fibers.

In various embodiments, the first thermoplastic film and the second thermoplastic film include at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK). In various embodiments, the honeycomb core includes at least one of aluminum (Al), titanium (Ti), or flame-resistant, high-temperature resistant fiber.

Also disclosed herein is an aerostructure. The aerostructure includes a thermoplastic composite and honeycomb structure. The thermoplastic composite and honeycomb structure includes a first thermoplastic composite skin welded, via ultrasonic welding, to a first side of a honeycomb core, and a second thermoplastic composite skin welded, via the ultrasonic welding, to a second side of a honeycomb core. The second thermoplastic composite skin is welded to the second side of the honeycomb core via a second thermoplastic film.

In various embodiments, the ultrasonic welding of the second thermoplastic composite skin to the second side of the honeycomb core melts the second thermoplastic film to bond the second thermoplastic composite skin to the second side of the honeycomb core. In various embodiments, the first thermoplastic composite skin is welded to the first side of the honeycomb core via a first thermoplastic film. In various embodiments, the ultrasonic welding of the first thermoplastic composite skin to the first side of the honeycomb core melts the first thermoplastic film to bond the first thermoplastic composite skin to the honeycomb core.

In various embodiments, the ultrasonic welding is at least one of ultrasonic spot welding or continuous ultrasonic welding. In various embodiments, the first thermoplastic composite skin and the second thermoplastic composite skin include a thermoplastic matrix and a fiber-reinforcement embedded within the thermoplastic matrix. In various embodiments, the thermoplastic matrix includes at least one of a semi-crystalline thermoplastic resin or an amorphous thermoplastic resin. In various embodiments, the fiber-reinforcement includes a plurality of fiber-reinforcement fibers. In various embodiments, the plurality of fiber-reinforcement fibers is at least one of metal fibers, carbon fibers, insulating fibers, organic fibers, or inorganic fibers.

In various embodiments, the first thermoplastic film and the second thermoplastic film include at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK). In various embodiments, the honeycomb core includes at least one of aluminum (Al), titanium (Ti), or flame-resistant, high-temperature resistant fiber.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B illustrate an aircraft, in accordance with various embodiments.
FIG. 2 illustrates a thermoplastic composite and honeycomb core structure, in accordance with various embodiments.
FIG. 3 illustrates welding a thermoplastic composite to a honeycomb core, in accordance with various embodiments.
FIG. 4 illustrates a method of forming a welded thermoplastic composite and honeycomb core structure, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

In current aircrafts, aerostructures using thermoplastic components are assemble using adhesive to bond the thermoplastic composite skin to an internal honeycomb structure. However, a low surface energy provides poor adhesion that limits the application of adhesive bonding. Disclosed herein is a thermoplastic structure and method of forming a thermoplastic structure for an aerostructure an aircraft or other vehicle that is capable of flight. The various embodiments addressed herein each may be characterized as being in the form of an "aerostructure." The term "aerostructure," as used in this disclosure, means a unit, component, section, or any portion or combination of portions of an aircraft or other vehicle that is capable of flight, where "vehicle" includes any structure that is used to transport one or more payloads of any appropriate type (e.g., cargo, personnel) and including without limitation manned or unmanned flight vehicles such as an aircraft. Representative aircraft in accordance with the foregoing includes without limitation airplanes, unmanned arial vehicles, helicopters, and the like. An aerostructure in accordance with this disclosure may be in the form of a fuselage, interior part, nacelle, rudder, elevator, aileron, fin, wing tip, flap, slat, spoiler, trim tab, stabilizer, or external antennae for a flight vehicle, as appropriate.

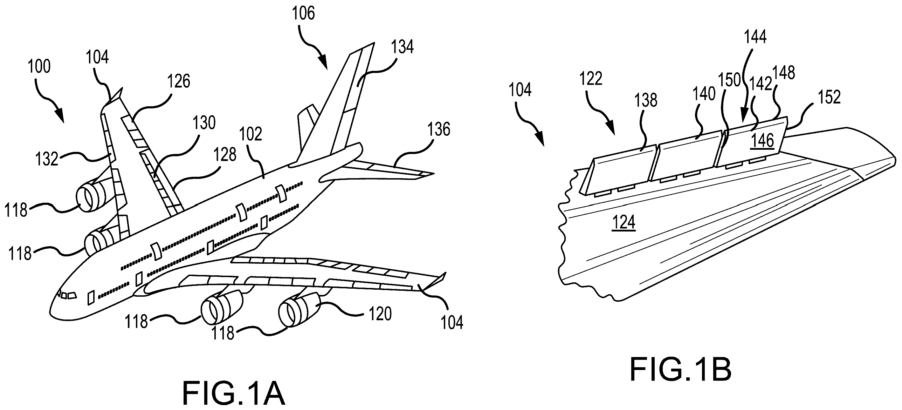

FIGS. 1A and 1B illustrate an aircraft, in accordance with various embodiments. Aircraft 100 includes a fuselage 102, a pair of wings 104, and a tail assembly 106. One or more propulsion systems 118 (e.g., a turbofan gas turbine engine with a nacelle assembly 120) may be coupled to the aircraft 100 (e.g., mounted on the underside of a wing 104). The propulsion systems 118 may be configured to provide at least one of forward thrust or propulsion for aircraft 100.

In various embodiments, the propulsion systems 118 may comprise an engine including a fan and an engine core, housed within a nacelle assembly 120. The typical nacelle assembly, or more simply a nacelle 120, may comprise an inlet, a fan cowl, a thrust reverser, and an exhaust system. The nacelle 120 surrounds the engine core providing smooth aerodynamic surfaces for airflow around and into the engine. The nacelle 120 also helps define a bypass air duct through the propulsion systems 118. In various embodiments, the fan may draw and direct a flow of air into and through the propulsion systems 118. After the fan, the air is divided into two principal flow paths, one flow path through engine core (i.e., a "core airflow"), and another flow path through a bypass air duct (i.e., a "bypass airflow"). The engine core flow path is directed into the engine core and initially passes through a compressor that increases the air flow pressure, and then through a combustor where the air is mixed with fuel and ignited. The combustion of the fuel and air mixture causes a series of turbine blades at the rear of the engine core to rotate, and to drive the engine's compressor and fan. The high-pressure exhaust gases from the combustion of the fuel and air mixture are thereafter directed through an exhaust system aft of the engine for thrust.

The wings 104 include a plurality of spoilers 122 disposed along an upper surface 124 of the wing 104, with each of the plurality of spoilers 122 illustrated in a deployed position. The variety of control surfaces typically used on the wings 104 of the aircraft 100 may include, for example, an aileron 126, a trailing edge flap 128, a spoiler 130, disposed adjacent to and forward of the trailing edge flap 128, and a leading-edge slat 132. Similarly, the variety of control surfaces typically used on the tail assembly 106 of the aircraft 100 may include, for example, a rudder 134 and an elevator 136. While the foregoing description of the variety of control surfaces generally refers to each control surface as a single component, it will be appreciated that, in various embodiments, each individual component, e.g., the spoiler 130, may be a single component within a plurality of like components, e.g., the plurality of spoilers 122, as illustrated in FIG. 1B. For example, with reference to FIG. 1B, the plurality of spoilers 122 may, in various embodiments, include a first spoiler 138, a second spoiler 140, and a third spoiler 142. In various embodiments, each one of the plurality of spoilers 122 includes an upper surface 144 and a lower surface 146 opposite the upper surface 144, a trailing edge 148, and an inboard end 150 (or a first end), and an outboard end 152 (or a second end).

In various embodiments, aerostructures, such as those forming portions of a fuselage 102, wings 104, tail assembly 106, nacelles 120, and other structural components of aircraft 100, increasingly include thermoplastic composite materials. Aircraft aerostructure materials utilized to form such aerostructures may be selected to provide suitable structural strength, rigidity, and impact resistance while also minimizing aerostructure weight. In particular, thermoplastic composite (TPC) materials are increasingly being used for aerostructure parts in order to reduce aerostructure weight and manufacturing costs, for example, in comparison to conventional metal (e.g., aluminum) and thermoset materials.

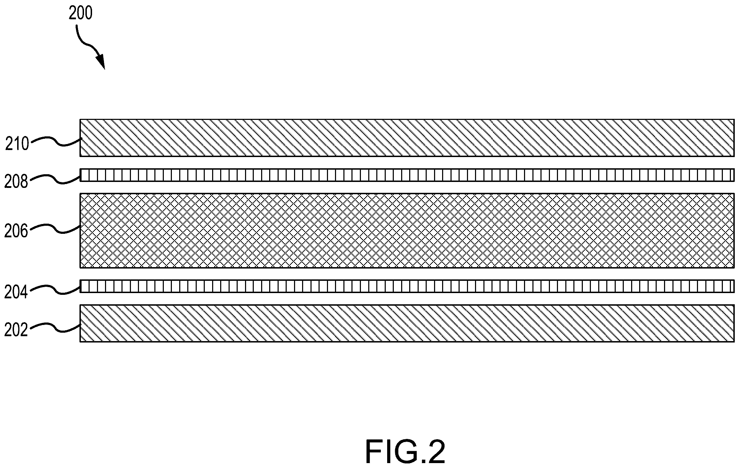

Referring now to FIG. 2, a thermoplastic composite and honeycomb core structure is illustrated, in accordance with various embodiments. In various embodiments, the thermoplastic composite and honeycomb structure 200 includes a first thermoplastic composite skin 202, a first thermoplastic film 204, a honeycomb core 206, a second thermoplastic film 208, and a second thermoplastic composite skin 210. In various embodiments, the first thermoplastic composite skin 202 and the second thermoplastic composite skin 210 may include a thermoplastic matrix and a fiber-reinforcement embedded within the thermoplastic matrix. In various embodiments, the thermoplastic matrix may include, but are not limited to, a semi-crystalline thermoplastic resin or an amorphous thermoplastic resin, among others. In various embodiments, the semi-crystalline thermoplastic resin may include polyester, polyoxymethylene (POM), polyamide (PA), polyarylene sulfide, polyketone (PK), polyetherketone (PEK), polyether ether ketone (PEEK), polyether ketone (PEKK), polyvinylidene fluoride (PVDF), polytetrafluoroethylene (PTFE), polyaryletherketone (PAEK), polyether nitrile (PEN), fluororesin, or liquid crystal polymer (LCP). In various embodiments, the polyester may include polyethylene terephthalate (PET), polybutylene terephthalate (PBT), polytrimethylene terephthalate (PTT), polyethylene naphthalate (PEN), or liquid crystal polyester, among others. In various embodiments, the polyarylene sulfide may be polyphenylene sulfide (PPS). In various embodiments, the fluororesin may be polytetrafluoroethylene. In various embodiments, the amorphous thermoplastic resin may include polycarbonate (PC), polymethyl methacrylate (PMMA), polyphenylene ether (PPE), polyimide (PI), polyamide imide (PAI), polyetherimide (PEI), polysulfone (PSU), polyether sulfone (PES), or polyarylate (PAR), among others. In various embodiments, the fiber-reinforcement may include a plurality of fiber-reinforcement fibers such as metal fibers, carbon fibers, insulating fibers, organic fibers, or inorganic fibers, among others. In various embodiments, the metal fibers may include aluminum fibers, brass fibers, or stainless-steel fibers, among others. In various embodiments, the carbon fibers may include graphite fibers such as polyacrylonitrile (PAN)-based carbon fibers, rayon-based carbon fibers, lignin-based carbon fibers, or pitch-based carbon fibers, among others. In various embodiments, a thickness of the first thermoplastic composite skin 202 and the second thermoplastic composite skin 210 may be between .05 inches (0.127 centimeter) and .25 inches (0.635 centimeter). In various embodiments, the thickness of the first thermoplastic composite skin 202 and the second thermoplastic composite skin 210 may be between .075 inches (0.1905 centimeter) and . 15 inches (0.381 centimeter). In various embodiments, the thickness of the first thermoplastic composite skin 202 and the second thermoplastic composite skin 210 may preferably be . 1 inches (0.254 centimeter).

In various embodiments, the first thermoplastic film 204 and the second thermoplastic film 208 may include a thermoplastic material having a melt temperature that does not substantially exceed the melt temperature of the first thermoplastic composite skin 202 and the second thermoplastic composite skin 210. In that regard, the first thermoplastic film 204 and the second thermoplastic film 208 may be different from the thermoplastic matrix of the first thermoplastic composite skin 202 and the second thermoplastic composite skin 210. That is, as indicated above, thermoplastic composite materials of the first thermoplastic composite skin 202 and the second thermoplastic composite skin 210 may include a thermoplastic matrix and a fiber-reinforcement embedded within the thermoplastic matrix. The thermoplastic matrix and a fiber-reinforcement may have different melt temperatures. Moreover, the fiber-reinforcement within a thermoplastic matrix may influence (e.g., increase or decrease) a melting temperature of a thermoplastic matrix material within the first thermoplastic composite skin 202 and the second thermoplastic composite skin 210. The term "melt temperature of a thermoplastic matrix material" as used herein refers to the temperature at which the thermoplastic matrix material begins to enter into a melt state. Preferably, the melt temperature of the first thermoplastic film 204 and the second thermoplastic film 208 is less than the melt temperature of the first thermoplastic composite skin 202 and the second thermoplastic composite skin 210. The melt temperature of the first thermoplastic film 204 and the second thermoplastic film 208 is configured to be high enough to permit welding of the first thermoplastic film 204 and the second thermoplastic film 208 to the honeycomb core 206. In that regard, the first thermoplastic film 204 and the second thermoplastic film 208 material is configured to be compatible with the honeycomb core 206. Accordingly in various embodiments, the first thermoplastic film 204 and the second thermoplastic film 208 is not limited to any particular thermoplastic material. In various embodiments, nonlimiting examples of acceptable the first thermoplastic film 204 and the second thermoplastic film 208 materials may include polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone (PEKK), or poly aryl ether ketone (PAEK). In various embodiments, a thickness of the first thermoplastic film 204 and the second thermoplastic film 208 may be chosen to ensure the first thermoplastic film 204 and the second thermoplastic film 208 may be heated into a melted state for welding the first thermoplastic composite skin 202 to the honeycomb core 206 and welding the second thermoplastic composite skin 210 to the honeycomb core 206. In that regard, in various embodiments, the thickness of the first thermoplastic film 204 and the second thermoplastic film 208 may be between .003 inches (0.00762 centimeter) and .02 inches (0.0508 centimeter). In various embodiments, the thickness of the first thermoplastic film 204 and the second thermoplastic film 208 may be between .004 inches (0.01016 centimeter) and .01 inches (0.0254 centimeter). In various embodiments, the thickness of the first thermoplastic film 204 and the second thermoplastic film 208 may preferably be .009 inches (0.02286 centimeters). In various embodiments, the first thermoplastic film 204 may be the combination of different layers of thin film to achieve the thickness mentioned above.

In various embodiments, the honeycomb core 206 may include aluminum (Al), titanium (Ti), or flame-resistant, high-temperature resistant fiber (one example is Nomex^{®} honeycomb core made of aramid fiber paper with the typical hexangular cell shape), among others. In various embodiments, a thickness of the honeycomb core 206 is application specific. That is the thickness of the honeycomb core 206 may be thicker or thinner depending on the specific aerostructure being formed.

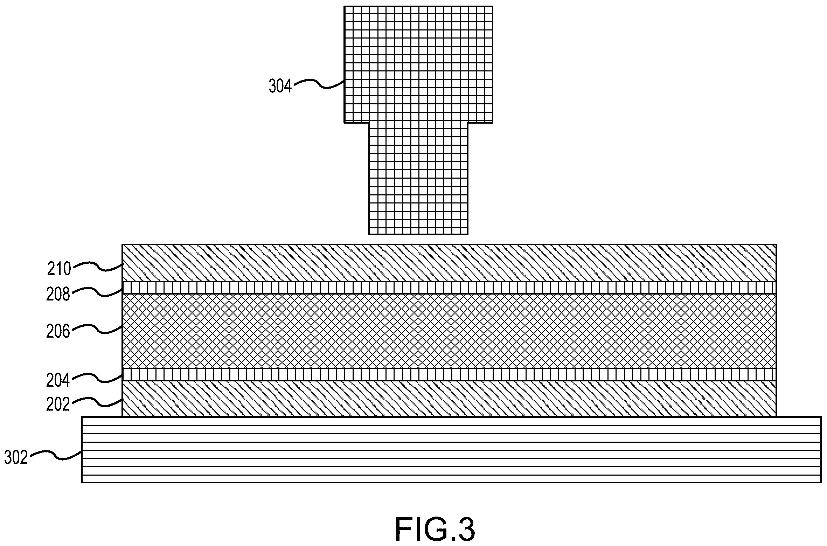

Referring now to FIG. 3, welding a thermoplastic composite to a honeycomb core is illustrated, in accordance with various embodiments. In various embodiments, the first thermoplastic composite skin 202 is positioned on a support structure 302. In various embodiments, the first thermoplastic film 204 is positioned over the first thermoplastic composite skin 202. In various embodiments, the honeycomb core 206 is positioned over the first thermoplastic film 204. In various embodiments, the second thermoplastic film 208 is positioned over the honeycomb core 206. In various embodiments, the second thermoplastic composite skin 210 is positioned over the second thermoplastic film 208. In various embodiments, an ultrasonic welder 304 is then positioned is over the second thermoplastic composite skin 210. In various embodiments, the ultrasonic welder 304 is configured weld the second thermoplastic composite skin 210 to the honeycomb core 206. The terminology "weld" as well as "join" or "melt" are used interchangeably to mean the consolidation of thermoplastic material using heat and/or pressure or, as in the various embodiments, adhering the second thermoplastic composite skin 210 to the honeycomb core 206 together to form a welded thermoplastic composite and honeycomb structure. In various embodiments, the ultrasonic welder 304 emits low-amplitude acoustic vibrations that melt the second thermoplastic film 208 thereby welding the second thermoplastic composite skin 210 to the honeycomb core 206. In various embodiments, common frequencies used in ultrasonic welding of thermoplastics include, but are not limited to 20 kHz, 30 kHz, 35 kHz, or 40 kHz, among others. In various embodiments, the ultrasonic welding performed by the ultrasonic welder 304 may be via ultrasonic spot welding or continuous ultrasonic welding. In various embodiments, spot welding includes utilizing a n-inch by n-inch sonotrode that is moved about the surface of the thermoplastic composite and honeycomb structure and held in place applying the ultrasonic vibrations for a predetermined time period to weld each n-inch by n-inch section the second thermoplastic composite skin 210 to the honeycomb core 206. In various embodiments, the continuous ultrasonic welding includes the sonotrode traveling continuously, at a predetermined speed, over the surface applying the ultrasonic vibrations to weld the second thermoplastic composite skin 210 to the honeycomb core 206.

In various embodiments, once the second thermoplastic composite skin 210 is welded to the honeycomb core 206, the thermoplastic composite and honeycomb structure is flipped over and the ultrasonic welder 304 is configured to weld the first thermoplastic composite skin 202 to the honeycomb core 206. In various embodiments, the ultrasonic welder 304 emits low-amplitude acoustic vibrations that melt the first thermoplastic film 204, thereby welding the first thermoplastic composite skin 202 to the honeycomb core 206. In various embodiments, the ultrasonic welding performed by the ultrasonic welder 304 may be via ultrasonic spot welding or continuous ultrasonic welding. In various embodiments, once the first thermoplastic composite skin 202 is welded to the honeycomb core 206, a welded thermoplastic composite and honeycomb core structure is produced.

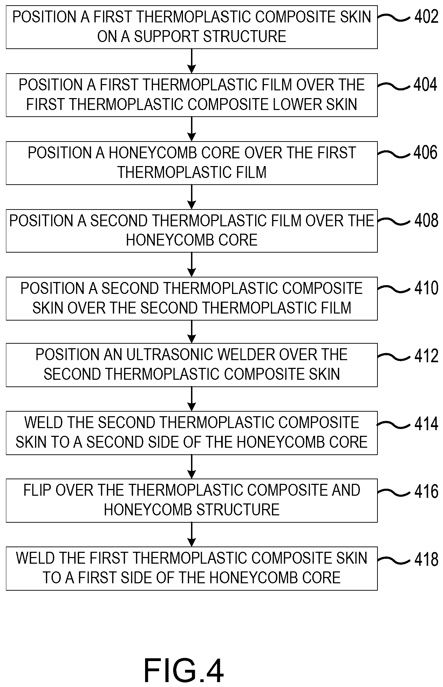

Referring now to FIG. 4, a method of forming a welded thermoplastic composite and honeycomb core structure is illustrated, in accordance with various embodiments. In various embodiments, at block 402, a first thermoplastic composite skin is positioned on a support structure. In various embodiments, at block 404, a first thermoplastic film is positioned over the first thermoplastic composite skin. In various embodiments, at block 406, a honeycomb core is positioned over the first thermoplastic film. In various embodiments, at block 408, a second thermoplastic film is positioned over the honeycomb core. In various embodiments, at block 410, a second thermoplastic composite skin is positioned over the second thermoplastic film. In various embodiments, at block 412, an ultrasonic welder is positioned over the second thermoplastic composite skin. In various embodiments, at block 414, the ultrasonic welder is configured to weld the second thermoplastic composite skin to a second side of the honeycomb core. In various embodiments, once the second thermoplastic composite skin is welded to the second side of the honeycomb core, at block 416, the thermoplastic composite and honeycomb structure is flipped over. In various embodiments, at block 418, the ultrasonic welder is configured weld the first thermoplastic composite skin to a first side of the honeycomb core, thereby generating a welded thermoplastic composite and honeycomb core structure.

In various embodiments of ultrasonic spot welding, such as illustrated in FIG. 3, a 0.5 inches (1.27 centimeters) thick Nomex^{®} honeycomb core (e.g., honeycomb core 206) may be welded to 0.052 inches (0.1321 centimeters) thick skins (e.g., thermoplastic composite skin 202, 210), made of carbon-fiber-reinforced polyphenylene sulphide (PPS) prepreg, trade name CETEX^{®} TC1100 provided by Toray Advanced Composites Netherlands B.V., Netherlands. The first and second thermoplastic films (e.g., thermoplastic film 204, 208), may be made of four layers of 0.0024 inches (0.006096 centimeters) thick PPS film provided by Toray Advanced Composites Netherlands B.V., Netherlands. The ultrasonic spot welding may be performed with a USP 3000 Welding System from Telsonic Ultrasonic, Bronschhofen, Switzerland, with a 2 inches (5.08 centimeters) square surface area sonotrode at a frequency of 20 kHz, a weld load of 380 pounds (172.4 kilograms) and a weld time of 4.5 seconds.

In various embodiments of continuous ultrasonic welding, such as illustrated in FIG. 3, a 0.5 inches (1.27 centimeters) thick Nomex^{®} honeycomb core (e.g., honeycomb core 206) may be welded to 0.052 inches (0.1321 centimeters) thick skins (e.g., thermoplastic composite skin 202, 210), made of carbon-fiber-reinforced polyphenylene sulphide (PPS) prepreg, trade name CETEX^{®} TC1100 provided by Toray Advanced Composites Netherlands B.V., Netherlands. The first and second thermoplastic films (e.g., thermoplastic film 204, 208), may be made of four layers 0.0024 inches (0.006096 centimeters) thick PPS film, provided by Toray Advanced Composites Netherlands B.V., Netherlands. The continuous ultrasonic welding may be performed with an ultrasonic power supply MAG and an ultrasonic converter SE20 (both provided by Telsonic Ultrasonic, Bronschhofen, Switzerland) with a 1 inch (2.54 centimeters) square surface area sonotrode installed on a robot system with a frequency of 20 kHz with a weld load of 170 pounds (77.11 kilograms) and a linear weld speed of 0.75 inches (1.905 centimeters) per second.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A manufacturing method for manufacturing a welded thermoplastic composite and honeycomb core structure, comprising:
generating a thermoplastic composite and honeycomb structure by:
positioning a first thermoplastic composite skin on a support structure;
positioning a first thermoplastic film over the first thermoplastic composite skin;
positioning a honeycomb core over the first thermoplastic film;
positioning a second thermoplastic film over the honeycomb core; and
positioning a second thermoplastic composite skin over the second thermoplastic film; and
ultrasonic welding the second thermoplastic composite skin to the honeycomb core.

2. The manufacturing method of claim 1, wherein the ultrasonic welding of the second thermoplastic composite skin to the honeycomb core melts the second thermoplastic film to bond the second thermoplastic composite skin to the honeycomb core.

3. The manufacturing method of claim 1 or 2, further comprising:
flipping over the thermoplastic composite and honeycomb structure; and
ultrasonic welding the first thermoplastic composite skin to the honeycomb core.

4. The manufacturing method of claim 3, wherein the ultrasonic welding of the first thermoplastic composite skin to the honeycomb core melts the first thermoplastic film to bond the first thermoplastic composite skin to the honeycomb core.

5. The manufacturing method of any preceding claim, wherein the ultrasonic welding is at least one of ultrasonic spot welding or continuous ultrasonic welding.

6. The manufacturing method of any preceding claim, wherein the first thermoplastic composite skin and the second thermoplastic composite skin comprise a thermoplastic matrix and a fiber-reinforcement embedded within the thermoplastic matrix.

7. The manufacturing method of claim 6, wherein the thermoplastic matrix comprises at least one of a semi-crystalline thermoplastic resin or an amorphous thermoplastic resin.

8. The manufacturing method of claim 6 or 7, wherein the fiber-reinforcement comprises a plurality of fiber-reinforcement fibers and wherein the plurality of fiber-reinforcement fibers is at least one of metal fibers, carbon fibers, insulating fibers, organic fibers, or inorganic fibers.

9. The manufacturing method of any preceding claim, wherein the first thermoplastic film and the second thermoplastic film comprise at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK); and/or
wherein the honeycomb core comprises at least one of aluminum (Al), titanium (Ti), or flame-resistant, high-temperature resistant fiber.

10. An aerostructure, the aerostructure comprising:
a thermoplastic composite and honeycomb structure, wherein the thermoplastic composite and honeycomb structure comprises:
a first thermoplastic composite skin welded, via ultrasonic welding, to a first side of a honeycomb core; and
a second thermoplastic composite skin welded, via the ultrasonic welding, to a second side of a honeycomb core, wherein the second thermoplastic composite skin is welded to the second side of the honeycomb core via a second thermoplastic film.

11. The aerostructure of claim 10, wherein the ultrasonic welding of the second thermoplastic composite skin to the second side of the honeycomb core melts the second thermoplastic film to bond the second thermoplastic composite skin to the second side of the honeycomb core; and/or
wherein the ultrasonic welding is at least one of ultrasonic spot welding or continuous ultrasonic welding; and/or
wherein the honeycomb core comprises at least one of aluminum (Al), titanium (Ti), or flame-resistant, high-temperature resistant fiber.

12. The aerostructure of claim 10 or 11, wherein the first thermoplastic composite skin is welded to the first side of the honeycomb core via a first thermoplastic film.

13. The aerostructure of claim 12, wherein the ultrasonic welding of the first thermoplastic composite skin to the first side of the honeycomb core melts the first thermoplastic film to bond the first thermoplastic composite skin to the honeycomb core; and/or
wherein the first thermoplastic film and the second thermoplastic film comprise at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

14. The aerostructure of any of claims 10 to 13, wherein the first thermoplastic composite skin and the second thermoplastic composite skin comprise a thermoplastic matrix and a fiber-reinforcement embedded within the thermoplastic matrix.

15. The aerostructure of claim 14, wherein the thermoplastic matrix comprises at least one of a semi-crystalline thermoplastic resin or an amorphous thermoplastic resin; and/or
wherein the fiber-reinforcement comprises a plurality of fiber-reinforcement fibers and wherein the plurality of fiber-reinforcement fibers is at least one of metal fibers, carbon fibers, insulating fibers, organic fibers, or inorganic fibers.
